Europäisches Patentamt

European Patent Office

Office européen des brevets

(11) Veröffentlichungsnummer: **0 156 376**
**A2**

# (12) EUROPÄISCHE PATENTANMELDUNG

(21) Anmeldenummer: 85103658.2

(22) Anmeldetag: 27.03.85

(51) Int. Cl.⁴: **G 01 N 27/28**

(30) Priorität: 30.03.84 DE 3411799
26.03.85 DE 3510868

(43) Veröffentlichungstag der Anmeldung:
02.10.85 Patentblatt 85/40

(84) Benannte Vertragsstaaten:
AT BE CH DE FR GB IT LI LU NL SE

(71) Anmelder: Conducta Gesellschaft für Mess- und
Regeltechnik mbH & Co.
Dieselstrasse 24
D-7016 Gerlingen b. Stuttgart(DE)

(72) Erfinder: Jäckle, Heiner G.
Buchenhofstaffel 1
D-7000 Stuttgart 1(DE)

(74) Vertreter: Otte, Peter, Dipl.-Ing.
Tiroler Strasse 15
D-7250 Leonberg(DE)

(54) Verfahren zum Schutz und/oder zur Überwachung eines Referenzsystems für die Analysen-Messtechnik auf Veränderung und Referenzsystem mit Bezugselektrode.

(57) Verfahren zum Schutz und/oder zur Überwachung eines Referenzsystems mit Bezugselektrode in der Analysen-Meßtechnik sowie Referenzsystem, wobei zur Selbstüberwachung auf Kontamination des äußeren Brückenelektrolyts (16) eine zusätzliche Überwachungselektrode vorgesehen und so angeordnet ist, daß durch diese der pH-Wert (pX-Wert) des Brückenelektrolyts gemessen werden kann, der auf den gleichen pH-Wert (pX-Wert) wie der Bezugselektrolyt eingestellt ist. Bei Auftreten einer Potentialdifferenz zwischen der zusätzlichen Elektrode und der eigentlichen Bezugselektrode des Referenzsystems wird ein Fehlersignal ausgelöst. Vorzugsweise steht ferner der Brückenelektrolyt über eine flexible Membran in der Wandung des ihn aufnehmenden Gefäßes mit dem Meßmedium im Druckausgleich, wobei die Membran das erste Diaphragma lagern kann.

Fig. 1

EP 0 156 376 A2

DIPL.-ING. PETER OTTE PATENTANWALT

Vertreter beim Europaischen Patentamt / European Patent Attorney

0156376 nberg

Tiroler Straße 15

1879/ot/mü
25.03.1985

Firma Conducta Gesellschaft für Meß- und Regeltechnik mbH + Co.,
Dieselstr. 24, 7016 Gerlingen

Verfahren zum Schutz und/oder zur Überwachung eines Referenzsystems für die Analysen-Meßtechnik auf Veränderung und
Referenzsystem mit Bezugselektrode

## Stand der Technik

Die Erfindung geht aus von einem Verfahren sowie einem Referenzsystem jeweils nach der Gattung des Hauptanspruchs bzw. der ersten
Vorrichtungsansprüche 5 und 13. Bezugselektroden, die ein konstantes
Referenzpotential beispielsweise für die pH- oder Redox-Messung zur Verfügung stellen, sind bekannt, auch in der Form sogenannter Elektrolyt-
Brücken-Systeme mit zwei hintereinander geschalteten Diaphragmen
(DE-OS 32 03 406, DE-OS 32 03 407). Bevorzugt bestehen solche Bezugselektroden aus einer Silber-Silberchlorid-Elektrode, die in eine
Lösung konstanter Chloridionenkonzentration eintaucht. Diese Lösung
ist, gegebenenfalls gelfixiert, über ein Diaphragma im einfachsten Fall
mit dem Meßmedium verbunden. Problematisch bei solchen Bezugs-

/2

systemen ist, daß diese wegen der nicht auszuschließenden Möglichkeit einer Kontamination von außen nicht potentialkonstant sind. Dabei kann durch das Diaphragma eine Diffusion in beiden Richtungen erfolgen, veranlaßt durch Konzentrationsunterschiede zwischen dem Bezugselektrolyt und dem Meßmedium, wobei bei einem Eindringen des Meßmediums in das Innere der Bezugselektrode die Gefahr der Verstopfung des Diaphragmas durch Kristallisation und die erwähnte Veränderung, nämlich Vergiftung des Bezugselektrolyten und des Ableitsystems besteht. In der Gegenrichtung kann sich ein Verlust an Bezugselektrolyt oder durch sogenannte Auswaschungen Konzentrationsänderungen des Elektrolyten ergeben. In diesem Zusammenhang und in Ergänzung des allgemeinen Diffusionsbegriffes ist auch wegen der notwendigen hydraulischen Durchlässigkeit des oder der Diaphragmen eine hydraulische Bewegung der Medien durch das Diaphragma zu berücksichtigen, veranlaßt durch Druckdifferenzen, die sich aufgrund eines Über- oder Unterdrucks des Meßmediums, verglichen zum Druck des Bezugselektrolyten ergeben, oder auch nur durch Temperaturveränderungen, die Änderungen im Druckgefälle nach sich ziehen.

Es ist üblich, Druckdifferenzen dadurch zu begegnen, daß man dem Bezugssystem von außen einen Druck zuführt, der mindestens gleich, gegebenenfalls geringfügig größer als der Mediumsdruck ist, wodurch ein hydraulisches Eindringen zwar vermieden wird, andererseits aber die Gefahr besteht, daß bei einem Wegbleiben des äußeren Mediumsdrucks Beschädigungen der Bezugselektrode aufgrund des dann überstarken inneren Drucks nicht ausgeschlossen sind. Eine andere Möglichkeit besteht darin, die Bezugselektrode nach außen hermetisch abzuschließen und ihren Innenraum vollständig zu füllen, so daß äußere Druckänderungen des Meßmediums nicht zu einer hydraulischen Bewegung durch das Diaphragma führen können. Hier können sich aber Probleme der notwendigen, hochgenauen Füllung ergeben, die unter Umständen Luftbläschen einschließt, so daß kein hinreichender Gegendruck im Bezugssystem gegen einen sich ändernden äußeren Mediumsdruck aufgebaut werden kann - eine hydraulische Bewegung durch das Diaphragma kann aber auch bei hermetischem Abschluß schon allein durch Temperaturveränderungen auftreten, was beispielsweise dazu führt, daß bei wiederholten stärkeren Temperaturdifferenzen sich eine Art "Atmung" des eingeschlossenen Volumens ergibt, wodurch wiederum eine hydraulische Wanderung durch das Diaphragma in beiden Richtungen auch bei hermetischem Abschluß des Bezugssystems auftritt.

Schließlich ist bei den bekannten Referenzsystemen nachteilig, daß auch bei sehr diffusionssicheren Systemen letzten Endes die Gefahr einer Vergiftung des Bezugselektrolyten und des Ableitsystems niemals ganz ausgeschaltet werden kann, der Benutzer jedoch keine Information darüber erlangen kann, inwieweit dies für tatsächlich im Betrieb befindliche Systeme der Fall ist und ob gegebenenfalls Wartung, Austausch oder Justierung erforderlich ist.

Der vorliegenden Erfindung liegt daher die Aufgabe zugrunde, ein gegebenenfalls schon mit Bezug auf Diffusion und Druckdifferenz optimiertes, zwei hintereinandergeschaltete Diaphragmen aufweisendes Referenzsystem für die Analysen-Meßtechnik dahingehend zu ergänzen, daß dieses in der Lage ist, selbsttätig seinen Zustand und insofern auch die Notwendigkeit einer Wartung oder eines Austausches an-

0156376

zuzeigen, ferner mit der fakultativen Möglichkeit, sicherzustellen, daß ein Mediumsaustausch durch das Diaphragma hindurch insbesondere unter dem Gesichtspunkt der hydraulischen Bewegung und insoweit veranlaßt durch Über- oder Unterdruck des Meßmediums bzw. Temperaturveränderungen, praktisch ausgeschlossen ist.

Vorteile der Erfindung

Das erfindungsgemäße Verfahren zur Überwachung bzw. das erfindungsgemäße Referenzsystem lösen diese Aufgabe jeweils mit den kennzeichnenden Merkmalen des Hauptanspruchs bzw. des ersten Vorrichtungsanspruchs und haben den Vorteil, daß im Fehlerfall durch ein elektrisches Signal eine sichere Warnanzeige, etwa zur Wartung u. dgl. schon dann ergeht, wenn lediglich erst der Brückenelektrolyt eine Veränderung erfahren hat, die eigentliche pH-Messung für diesen Zeitpunkt aber noch vollkommen in Ordnung ist, da der innere Bezugselektrolyt noch nicht beeinflußt ist. Da der Brückenelektrolyt leicht ausgewechselt werden kann, ergibt sich bei dem erfindungsgemäßen Bezugssystem die Möglichkeit, Fehlereinflüsse, Konzentrationsänderungen des Brückenelektrolyten und ähnlichen negativen Wirkungen schon dann zu begegnen, wenn diese das eigentliche Bezugssystem weder erreicht haben noch beeinflussen können.

Zur Klarstellung der Erfindung und des erfindungsgemäßen Rahmens wird nachdrücklich betont, daß die im folgenden im wesentlichen ausschließlich verwendeten Begriffe einer pH-Meßelektrode oder pH-Bezugselektrode, einer pH-sensitiven Elektrode o. dgl. grundsätzlich auch den allgemeinen Begriff einer potentiometrischen Meßelektrode oder Bezugselektrode umfassen, die auch als pX-Elektrode bezeichnet werden kann, und wobei X für das chemische Kurzzeichen des zu messenden Ions steht. Wird daher im folgenden der Begriff einer pH-Elektrode, in welchem Zusammenhang auch immer, verwendet, so geschieht dies aus Gründen der Klarheit und Übersichtlichkeit und um ständige Wiederholungen und Verweisungen auf den allgemeineren Begriff einer potentiometrischen Meßelektrode überflüssig zu machen.

Durch die in den Unteransprüchen aufgeführten Maßnahmen sind vorteilhafte Weiterbildungen und Verbesserungen des erfindungsgemäßen Systems
(Überwachungsverfahren und Referenzsystem) möglich. Besonders vorteilhaft ist dabei die Anordnung der pH-Bezugs(glas)elektrode in dem Gefäß
oder Glasstab,      welches den    Bezugselektrolyten mit konstantem
pH-Wert enthält, um das Referenzpotential zu liefern, welches in Verbindung mit der eigentlichen, in die Meßlösung eintauchenden pH-
Meßelektrode oder, allgemein ausgedrückt, pX-Elektrode  deren
(Wasserstoff)Ionenkonzentration zu messen erlaubt, sowie die zusätzliche Anordnung einer pH-sensitiven Elektrode zusammenfassend im Gefäß
des Bezugssystems,      wobei die letztere pH-Elektrode oder pX-
Elektrode die jeweilige Ionenkonzentration des Brückenelektrolyts
überwacht. Da notwendigerweise das Eindringen des Meßmediums nur
über das erste, äußere Diaphragma zunächst in den Brückenelektrolyt
möglich ist, wobei der  Bezugselektrolyt  noch vollkommen unbeeinflußt ist, kann man durch Differenzmessung und Vergleich des Potentials, welches von der den Brückenelektrolyt überwachenden pH-
Elektrode geliefert wird, mit dem eigentlichen Bezugspotential dann
auf eine Störung oder Änderung des Brückenelektrolyts schließen,
wenn sich hier eine Differenzspannung ergibt. Beim Überschreiten
eines vorgegebenen, vorzugsweise schon sehr geringen Schwellwertes
kann eine Alarmgabe bewirkt werden.

Vorteilhaft ist bei vorliegender Erfindung ferner, daß die elastische Membran im Wandungsbereich zwischen Übergangs- oder Brücken-
Elektrolyt und dem Meßmedium - der Begriff elastische Membran
steht hier für jede Art von kompressiblem Wandmaterial, welches
in der Lage ist, die nachfolgend erläuterten Funktionen zu erfüllen -
jedenfalls so weit beweglich ist, daß eventuell vorhandene, kompressible Teile oder Materialien, etwa in Form von einem oder mehreren
Luftbläschen oder die durch Temperaturveränderungen und hierdurch
hervorgerufenen Wärmedehnungen entstehenden Volumenatmungen
durch die Membran aufgefangen und ausgeglichen werden, so daß ohne
Einsatz einer äußeren Druckkompensation Druckunterschiede ausgeglichen und so insbesondere die hydraulische Bewegung in Richtung auf den Innenraum, die die gefürchtete Vergiftung des Verbindungs- oder Brückenelektrolyts zur Folge hätte, ausgeschlossen ist.

Ein weiterer Vorteil vorliegender Erfindung, der insbesondere auch den Problemen begegnet, die sich dadurch ergeben, daß das kontaminierbare Silber/Silberchloridelement zu Potentialdriften führende chemische Verbindungen eingeht, daß sich Ablösungen des Silberchlorids ergeben und daß insbesondere eine nachteilige Abhängigkeit zur Chloridionenkonzentration vorliegt, die sich zwar ihererseits durch Sättigung auf einem konstanten Niveau bewegen soll, aber infolge ihrer Temperaturabhängigkeit und sich hierdurch ergebender Untersättigungsmöglichkeiten doch Konzentrationsänderungen nicht ausschließt, besteht darin, daß man einen Zwischen- oder Bezugselektrolyten mit konstantem, nicht veränderbaren pH-Wert im Sinne einer Pufferlösung verwendet und in diese innere Lösung eine pH-Glaselektrode als Bezugselektrode eintaucht. Da der pH-Wert des Bezugselektrolyten unabhängig von seinem Verdünnungsgrad und unabhängig davon, welchen Temperaturänderungen er ausgesetzt ist, immer konstant bleibt, vorzugsweise bei pH 7 liegt, - hier können für sich gesehen bekannte Pufferlösungen in Form schwacher Säuren oder Basen mit der Fähigkeit zur Nachdissoziation verwendet werden - liefert die Bezugselektrode ein durchgehend konstantes Referenzpotential. Dabei ist die in den Bezugselektrolyten konstanten pH-Werts eintauchende Bezugselektrode gebildet von einer hermetisch abgeschlossenen und damit unvergiftbaren pH-Glaselektrode.

Vorteilhaft ist bei einem weiteren Ausführungsbeispiel die Anordnung der Referenzableitung aus AgAgCl in einem gesättigte KCl-Lösung enthaltenden Gefäß, welches seinerseits in das vorzugsweise ebenfalls einen auf pH 7 gepufferten KCl-Zwischenelektrolyten enthaltende Referenzsystem-Gefäß eintaucht, in dem sich auch die Überwachungselektrode befindet.

Durch die in den Unteransprüchen aufgeführten Maßnahmen sind vorteilhafte Weiterbildungen und Verbesserungen des erfindungsgemäßen Referenzsystems möglich. Besonders vorteilhaft ist die Anordnung des ersten Diaphragmas innerhalb einer Druckausgleichsmembran, die die elastische Membran zum Ausgleich von Volumenatmungen des Brückenelektrolyts ist sowie die Möglichkeit, den Brückenelektrolyt als Verbindungselektrolyten zum Ableitsystem auszuwechseln, und zwar, beispielsweise abgestellt auf vorgegebene Zeiträume, so rechtzeitig, daß eine Vergiftung des inneren oder Bezugselektrolyten (noch) nicht möglich ist oder noch nicht stattgefunden hat, wenn man eine Diffusion über das erste Diaphragma aufgrund von Konzentrationsunterschieden nicht ausschließen kann.

Zeichnung

Ausführungsbeispiele der Erfindung sind in der Zeichnung dargestellt und werden in der nachfolgenden Beschreibung näher erläutert. Dabei zeigen:

Fig. 1 in einer schamatisierten Schnittdarstellung ein Kombinations-Elektrodensystem als erstes Ausführungsbeispiel, welches in einem gemeinsamen Lager- und Montageblock einen Thermofühler, die eigentliche pH-Elektrode, die in die Meßlösung taucht, sowie das die erfindungsgemäßen Maßnahmen enthaltende Referenzsystem in einer Packung vereinigt;

Fig. 2 ein weiteres Ausführungsbeispiel mit getrennt in den Zwischenelektrolyten eintauchender Bezugssystem-Elektrode und Überwachungselektrode und

Fig. 3 ein mindestens teilweise niederohmig messendes Referenzsystem mit einer AgAgCl-Ableitung in gesättigter KCl-Lösung.

Beschreibung der Ausführungsbeispiele

Der Grundgedanke vorliegender Erfindung besteht darin, daß in Verbindung mit dem Stromschlüsselgefäß oder Brückenelektrolytgefäß, mit dessen Stromschlüsselelektrolyten ein innerer Elektrolyt über ein Diaphragma in Verbindung steht, in den die Bezugselektrode eintaucht, in das Stromschlüsselgefäß zusätzlich eine pX-Elektrode (pH-Glaselektrode) eintaucht oder diesem zugeordnet ist, die mit ihrem sensitiven Element (Glasmembran) den pH-Wert (pX-Wert) des Brückenelektrolyten erfaßt. Dabei kann die in den inneren Elektrolyten mit konstantem pH-Wert (pX-Wert) eintauchende Bezugselektrode eine pX-Elektrode (pH-Glaselektrode) sein. Da auch der Brücken-elektrolyt auf einen vorgegebenen pH-Wert oder pX-Wert gepuffert ist, der vorzugsweise gleich ist dem pH-Wert (pX-Wert) des Bezugselektrolyten oder inneren Elektrolyten - andernfalls müßte bei der Überwachungsmessung auf ein vorgegebenes Schwellenpotential abgestellt werden -, müssen beide pH-Elektroden des Referenzsystems das gleiche Potential messen oder, mit anderen Worten, die zusätzliche pH-Elektrode kann den Brückenelektrolyt auf Kontamination überwachen. Ferner umfaßt der Grundgedanke der Erfindung die Maßnahme, das das Elektrolyt-Brückensystem mit zwei hintereinandergeschalteten Diaphragmen umfassende Referenzsystem so zu optimieren, daß eine durch Druckunterschiede zum Meßmedium sonst zu erwartende hydraulische Bewegung vollkommen ausgeschlossen ist und außerdem bevorzugt die in den Brücken-Elektrolyt oder Verbindungselektrolyt eintauchende Überwachungselektrode über ein Ableitsystem verfügt, welches von einer hermetisch abgeschlossenen und damit unvergiftbaren Glaselektrode gebildet ist. Das zweite Diaphragma befindet sich dann zwischen dem Brücken-Elektrolyt und dieser Überwachungselektrode.

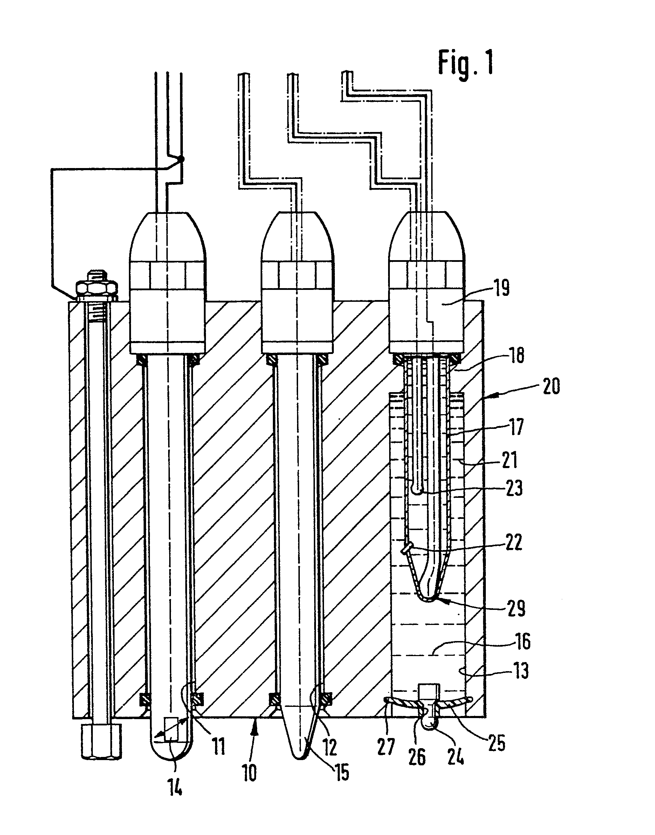

In der Zeichnung der Fig. 1 als erstes Ausführungsbeispiel ist der aus einem beliebigen Material, Metall, Kunststoff, Glas u. dgl. bestehende Lagerblock mit 10 bezeichnet; er verfügt über drei Bohrungen oder Aufnahmeöffnungen 11, 12, 13, die in dieser Reihenfolge einen Thermofühler 14, die in die Meß- oder Prozeßlösung eintauchende pH-Elektrode 15 sowie das Referenzsystem aufnehmen und lagern, wobei die Aufnahmeöffnung 13 für das Referenzsystem gleichzeitig mit seiner Innenwandung das Gefäß bildet, welches den Verbindungs- oder Brückenelektrolyten 16 des Referenzsystems enthält. Über einen verengten Halsteil mit Zwischendichtung 18 taucht in diesen Brückenelektrolyt 16 die Bezugselektrode 19 des Bezugssystems 20 ein, die vorzugsweise aus einem Röhrchen geeigneten Materials, insbesondere hochalkalifestem Glas besteht und nach oben aus der Aufnahmebohrung 13, beispielsweise zum Auswechseln des Brücken-Elektrolyts 16, entnommen werden kann. Die Bezugselektrode 19 bildet ein Stromschlüsselgefäß, in welchem ein innerer Elektrolyt oder Bezugselektrolyt 21 mit konstantem pH-Wert als Pufferlösung enthalten sein kann. Der Übergang vom Bezugselektrolyten 21 zum Brückenelektrolyt ist gebildet von einem zweiten inneren, kleineren Diaphragma 22, welches an beliebiger Stelle angeordnet sein kann und sich bei dem dargestellten Ausführungsbeispiel seitlich am Stromschlüsselgefäß befindet.

Eine wesentliche erfinderische Maßnahme besteht darin, daß in den Bezugselektrolyten 21 mit konstantem pH-Wert, der vorzugsweise als schwache Säure oder Base in Form einer Pufferlösung ausgebildet den pH-Wert 7 aufweist und diesen auch bei Verdünnung oder sonstigen Einflüssen beibehält, das Bezugsableitsystem in Form einer hermetisch abgeschlossenen und damit unvergiftbaren pH-Glaselektrode 23 eintaucht. Diese zweite innere pH-Glaselektrode des Bezugssystems mißt, da der pH-Wert der sie umgebenden Lösung konstant ist, stets ein gleichbleibendes Referenzpotential.Dabei ist der Bezugselektrolyt 21 mit konstantem pH-Wert bevorzugt geliert und insofern kontaminationsfeindlich.

Ein weiteres wesentliches Merkmal vorliegender Erfindung wird darin gesehen, daß jedenfalls durch Druckunterschiede zwischen der Meß- oder Prozeßlösung einerseits und dem mit dieser über das erste, vergleichsweise größere Diaphragma 24 in Verbindung stehenden Brückenelektrolyten bewirkte hydraulische Bewegungen über das Diaphragma 24 deshalb ausgeschlossen werden können, weil solche Druckunterschiede aufgrund einer besonderen Maßnahme, nämlich mindestens eines membranartig unter dem Druck der Prozeßlösung nachgebenden Wandungsteils ausgeschlossen sind.

Bei dem dargestellten Ausführungsbeispiel ist eine flexible Membran bei 25 dargestellt, so daß sie gleichzeitig auch durch eine innere Aufnahme 26 das erste Diaphragma lagern kann - diese Membran 25 ist daher aufgrund ihres Lager- und Einspannortes bei 27 ringförmig und an ihrem Außenumfang in einer entsprechenden, umlaufenden Aufnahmenut der Öffnung oder Bohrung 13 im Block 10 gehalten und festgespannt. Die Membran 25 besteht aus einem geeigneten, elastischen Werkstoff wie Teflon, Viton o. dgl., beispielsweise auch einem Werkstoff, wie er
für übliche Ventilmembranen verwendet wird, und kann
daher durch beliebige Einflüsse (kompressible Teile,
Luftblasen o. dgl. im Brückenelektrolyt, Temperaturabhängigkeiten) bewirkte Volumensatmungen des gesamten,
ansonsten hermetisch abgeschlossenen Referenzsystems
auffangen und ausgleichen, nämlich durch seine eigene
Bewegung, wie ohne weiteres einzusehen. Durch eine solche, aufgrund von Druckdifferenzen atmende Membran kann
auf äußere Druckkompensationen völlig verzichtet werden
und eine Kontamination des ohnehin auswechselbaren
Brückenelektrolyten 16, der vorzugsweise ebenfalls den
pH-Wert 7 aufweist, ist daher, jedenfalls was eine
hydraulische Wanderung infolge Über- oder Unterdruck
des Meßmediums betrifft, im wesentlichen ausgeschlossen.

Ein wesentliches Merkmal vorliegender Erfindung besteht
daher darin, wie eingangs schon erwähnt, daß am inneren den Bezugselektrolyten enthaltendem Gefäß 17 eine pH-sensitive Elektrode
29 (pX-sensitive Elektrode) so angeordnet ist, daß sie
mit ihrer (Glas)Membran den pH-Wert (pX-Wert) des Verbindungs- oder Brückenelektrolyts 16 mißt. In der elektrochemischen Reihenschaltung kommt dann das innere Diaphragma
22, der innere Bezugselektrolyt 21 mit konstantem pH-Wert
als Pufferlösung und dann die das Bezugspotential für
den eigentlichen Meßvorgang liefernde pH-Glaselektrode
23, wie weiter vorn schon erläutert.

Dabei ist der Brückenraum, also das den Brückenelektrolyt 16
aufnehmende Gefäß - hier in Form der Bohrungsausnehmung
13 des Blocks 10, mit einem Brückenelektrolyt mit dem
gleichen pH-Wert gefüllt, wie der Bezugselektrolyt,
so daß die beiden Elektrolyten 16 und 21 vorzugsweise

den gleichen pH-Wert 7 aufweisen und auch die gleiche Pufferlösung sein können. Auf diese Weise ist eine Selbsterkennung einer Kontamination des Brückenelektrolyts 16 möglich, der durch verbleibende Diffusionseinwirkungen (natürlich) als erster des Referenzsystems über das erste Diaphragma 24 in Vergiftungsgefahr durch Einflüsse aus dem Meßmedium gerät, falls aus dem Meßmedium etwas eindringt, welches pH-verändernd auf zunächst jedenfalls den Brückenelektrolyten 16 wirkt.

Da diese Veränderung oder Vergiftung des Brückenelektrolyts zeitlich vor einer späteren, nicht auszuschließenden Vergiftung dann auch des Bezugselektrolyten 21 liegt, ergibt sich zwischen den beiden pH-Glaselektroden 29 und 23 eine Potentialdifferenz, die erst dann wieder verschwinden würde, wenn in gleicher Weise auch der Bezugselektrolyt kontaminiert ist. Diese Differenz, die auf ein $\Delta pH$ zwischen den beiden Elektrolyten 16 und 21 zurückzuführen ist, wird zur Fehlermeldung ausgenutzt. Beispielsweise kann ein geeignetes Warnsignal akustisch und/oder optisch ergehen mit der Möglichkeit einer Auswechselung des Brückenelektrolyts bei vollständig unverändertem Restsystem, also Bezugselektrode 19 mit ihren pH-Glaselektroden.

Bei dem dargestellten Ausführungsbeispiel in der Zeichnung ist die Überwachungs-pH-Glaselektrode 29 als inneres Glasröhrchen ausgebildet und nach oben geführt, wobei das Glasröhrchen im Gefäß der Bezugselektrode 19 unten einwandig mit seiner Glasmembran als sensitives Element der Einwirkung des Brückenelektrolyts 16 ausgesetzt ist.

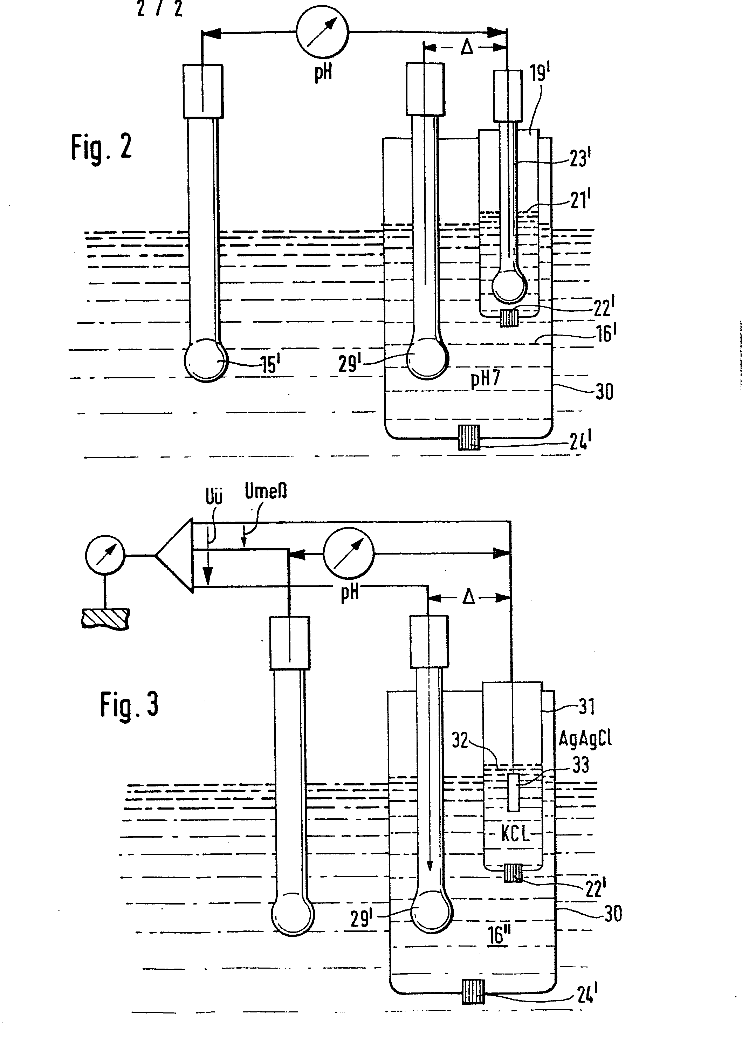

Ein weiteres, sich im wesentlichen lediglich durch einen unterschiedlichen Aufbau von der soeben erläuterten Ausführungsform eines Überwachungssystems für die pH-Messung unterscheidendes Ausführungsbeispiel ist, bei Beibehaltung der Grundfunktion, in Fig. 2 dargestellt.

Auch dieses Ausführungsbeispiel umfaßt ein erstes, in die Meßlösung, deren sich ändernder pH-Wert bestimmt werden soll, eintauchendes Gefäß 30, welches den Brückenelektrolyten 16' enthält; in dieses Gefäß 30 taucht die den inneren Elektrolyten oder Bezugselektrolyten 21 enthaltende Bezugselektrode 19' ein, die bei 22' einen von einem inneren Diaphragma gebildeten Übergang zum Brückenelektrolyten 16' aufweist. In den inneren Elektrolyten 21' taucht, wie für sich gesehen bei Referenzsystemen bekannt, die unvergiftbare pH-Elektrode 23' (Glaselektrode) ein, die das konstante Bezugspotential für die pH-Messung liefert. Der äußere Übergang des Brückenelektrolyten 16' zur Meßlösung ist von einem äußeren Diaphragma 24' gebildet.

Bei diesem Referenzsystem mit gleichzeitiger Überwachung des Brückenelektrolyten 16' taucht ferner in diesen separat eine pH-sensitive Überwachungsglaselektrode 29' ein mit der weiter vorn schon erläuterten Voraussetzung, daß bei einwandfreiem Brückenelektrolyt 16' (beispielsweise gepuffert auf pH 7) zwischen der Referenz- oder Bezugselektrode 19' und der Überwachungselektrode 29' kein Δ-Potential auftritt. Die pH-sensitive Glasmeßelektrode ist mit 15' bezeichnet; sie taucht wie üblich in die Meßlösung unmittelbar ein. Bei diesem Ausführungsbeispiel sind sämtliche Elektroden der Meßkette und der Referenz-Überwachungskette als chemisch inerte, stabile Potentiale erzeugende Glaselektroden mit Glasmembranen gebildet, die

jedoch im Übergang hochohmig sind, so daß für die Messung auch mit sehr hohen Eingangswiderständen ausgestattete Verstärker oder Impedanzwandler einzusetzen sind.

Ein weiteres, bevorzugtes Ausführungsbeispiel der Erfindung, welches einige technische Probleme, auch das der Hochohmigkeit der als Bezugselektrode verwendeten pH-sensitiven Glaselektroden beseitigt, ist in Fig. 3 gezeigt und umfaßt ein in das den Brückenelektrolyten 16" enthaltende Gefäß 30' eintauchendes Gefäß oder Kammer 31, die eine Flüssigkeit oder Lösung 32 enthält, die mit dem Salz der in diese Flüssigkeit wiederum eintauchenden Ableitung 33 das Anion gemeinsam hat.

Im praktischen Anwendungsfall folgt daher dieses im Potential konstante Referenzsystem der bekannten elektrischchemischen Definition, daß ein Metall, hier vorzugsweise wie üblich Silber, überzogen mit einem wasserunlöslichen Salz dieses Metalls (Silberchlorid), eintauchend in eine Flüssigkeit, die mit dem Salz das Anion gemeinsam hat und mit Bezug auf das Anion konzentrationsstabil ist, ein konstantes Potential abgibt. In dem Gefäß 31 befindet sich daher als bevorzugtes Ausführungsbeispiel eine gesättigte Kaliumchloridlösung (KCl), wodurch das konstante Referenzpotential sichergestellt ist.

Vorzugsweise wird jetzt für den Zwischenelektrolyten oder Brückenelektrolyten ebenfalls eine, auf pH 7 gepufferte Kaliumchloridlösung benutzt, in die dann die Überwachungselektrode 29' mit gleichem Aufbau wie bei der Darstellung der Fig. 2 eintaucht.

Eine solche pH-Meßketten- und Überwachungs-Meßkettenan-

ordnung hat den Vorteil, daß durch die AgAgCl-Ableitung, eintauchend in die gesättigte Kaliumchloridlösung, eine mindestens auf einer Seite liegende Niederohmigkeit in beiden Messungen (pH-Messung (pX-Messung) und Überwachungsmessung) erzielt werden kann. Trotz der Niederohmigkeit der Gewinnung von Meß- und Überwachungssignalen werden diese bevorzugt hochohmig weiterverarbeitet, also beispielsweise Operations- oder Vergleichsverstärkern oder Impedanzwandlern mit hochohmigen Eingängen zugeführt, wodurch sich Potentialverschiebungen vollständig aus dem Meßergebnis heraushalten lassen, die beispielsweise durch Widerstandsänderungen der Diaphragmen 22', 24' auftreten könnten, beispielsweise wenn diese verstopfen, und zwar auch in der Meßphase, wodurch sich ein Wegdriften der Meßsignale im Falle der niederohmigen Signalgewinnung, wie in Fig. 3 gezeigt, sonst ergeben könnte.

Für diesen Fall der Signalgewinnung ist dann eine zusätzliche Potentialausgleichselektrode, wie sie gegebenenfalls bei den weiter vorn erläuterten Ausführungsbeispielen zur Anwendung kommen kann, nicht erforderlich.

Alle in der Beschreibung, den nachfolgenden Ansprüchen und der Zeichnung dargestellten Merkmale können sowohl einzeln als auch in beliebiger Kombination miteinander erfindungswesentlich sein.

1879/ot/wi
25.03.1985

Firma Conducta Gesellschaft für Meß- und Regeltechnik
mbH + Co., Dieselstr. 24, 7016 Gerlingen

Patentansprüche ·

1. Verfahren zum Schutz und/oder Überwachung eines Referenzsystems mit Bezugselektrode auf eine zu einer Potentialdrift führenden Veränderung (Kontamination) in der Analysen-Meßtechnik, insbesondere für die Messung von (Wasserstoff)Ionenkonzentrationen und -aktivitäten in einem Meßmedium (Meß- oder Prozeßlösung) in Verbindung mit einer potentiometrischen Meßelektrode, z.B. pH-Meßelektrode, zur Erzeugung konstanter Bezugsspannungen in der Potentiometrie u. dgl., mit einem Elektrolyt-Brückensystem mit zwei hintereinandergeschalteten Diaphragmen, dadurch gekennzeichnet, daß das Entstehen einer auf eine pH-Wertdifferenz ($\Delta$pH) / pX-Wertdifferenz ($\Delta$pX) zwischen Bezugselektrolyt und Brückenelektrolyt zurückzuführende Potentialdifferenz erfaßt und bei ihrem Auftreten ein Fehlersignal ausgelöst wird.

2. Verfahren nach Anspruch 1, dadurch gekennzeichnet, daß bei hermetisch dicht gehaltenem Abschluß zwischen dem Übergangselektrolyten und der Meßlösung der Aufbau von Druckdifferenzen zwischen beiden dadurch verhindert wird, daß mindestens ein Teilbereich des den

Übergangselektrolyten (16) enthaltenden Wandungsteils elastisch ausgebildet wird.

3. Verfahren nach Anspruch 2, dadurch gekennzeichnet, daß der elastische Wandungsteil von einer Membran (25) gebildet wird, die das erste Diaphragma (24) lagert und durch ihre Beweglichkeit hydraulische Bewegungen durch dieses Diaphragma verhindert.

4. Verfahren nach Anspruch 1, dadurch gekennzeichnet, daß die Potentialdifferenz gewonnen wird durch Vergleich des von der eigentlichen Bezugselektrode (23) erzeugten Potentials mit einem von einer zusätzlichen Überwachungselektrode (pH-Elektrode 29) erzeugten Potentials, deren (Glas)Membran den pH-Wert (pX-Wert) des Brückenelektrolyts (16) mißt.

5. Referenzsystem mit Bezugselektrode für die Analysen-Meßtechnik, insbesondere zur Messung von (Wasserstoff)-Ionenkonzentrationen und -aktivitäten in einem Meßmedium (Meß- oder Prozeßlösung) in Verbindung mit einer potentiometrischen Meßelektrode (pH-Meßelektrode; pX-Elektrode) zur Erzeugung konstanter Bezugspotentiale in der Photometrie, Coulometrie u. dgl., mit einem ersten, mit dem Meßmedium über ein erstes Diaphragma in Verbindung stehenden Übergangselektrolyten (Brückenelektrolyt) und einem zweiten, mit dem ersten Elektrolyten über ein zweites Diaphragma in Verbindung stehenden inneren Elektrolyten, zur Durchführung des Verfahrens nach Anspruch 1 oder 4, dadurch gekennzeichnet, daß eine zusätzlich Überwachungselektrode (pH-Elektrode; pX-Elektrode) zur Messung des pH-Werts (pX-Werts) des Brückenelektrolyts (16) vorgesehen ist, wobei der Brückenelektrolyt vorzugs-

-3-

weise den gleichen pH-Wert (pX-Wert) wie der Bezugselektrolyt hat.

6. Referenzsystem nach Anspruch 5, zur Durchführung des Verfahrens nach Anspruch 2 oder 3, dadurch gekennzeichnet, daß das den Übergangselektrolyten (16) enthaltende Gefäß bei sonstigem, hermetisch-dichtem Abschluß zur Meß- oder Prozeßlösung einen eine elastische, durch ihre Beweglichkeit den Aufbau von Druckdifferenzen zwischen Meßmedium und Brückenelektrolyt verhindernde Membran (25) enthaltenen Wandungsteil aufweist, derart, daß hydraulische Bewegungen durch das erste Diaphragma (24) hindurch ausgeschlossen sind.

7. Referenzsystem nach Anspruch 5, dadurch gekennzeichnet, daß die zusätzliche Überwachungselektrode als pH-Glaselektrode (2 ) zur Überwachung des Brückenelektrolyts von einem in das den Bezugselektrolyten enthaltende Gefäß (1) eingeschmolzenen Glasröhrchen gebildet ist, dessen sensitives Element (Glasmembran) unten einwandig in die Bezugselektrodenwandung übergeht und in den Brückenelektrolyt (16) eintaucht.

8. Referenzsystem nach Anspruch 5 oder 7, dadurch gekennzeichnet, daß der gegenüber dem Brückenelektrolyt (16) durch ein zweites Diaphragma (22) getrennte Bezugselektrolyt (21) ein Elektrolyt mit konstantem pH-Wert ist, derart, daß eine Diffusion durch Konzentrationsunterschiede verhindert ist.

9. Referenzsystem nach Anspruch 8, dadurch gekennzeichnet, daß der Bezugselektrolyt eine Pufferlösung mit dem pH-Wert 7 mit der Fähigkeit zur Nachdissoziation ist.

10. Referenzsystem nach Anspruch 8, dadurch gekennzeichnet, daß der auswechselbare Brückenelektrolyt auf p$^H$ 7 gepuffert ist.

11: Referenzsystem nach Anspruch 6, dadurch gekennzeichnet, daß das erste Diaphragma (24) zwischen Meßmedium und Brückenelektrolyt (16) in der als elastischen Ringmembran ausgebildeten Membran (25) angeordnet und von dieser getragen ist.

12. Referenzsystem nach einem der Ansprüche 5 bis 11, dadurch gekennzeichnet, daß das in die gepufferte Bezugselektrolyten-Lösung (pH 7) eintauchende Ableitsystem eine hermetisch abgeschlossene, unvergiftbare pH-Glaselektrode ist (23) und das zweite Diaphragma (22) zwischen diesem Ableitsystem und dem Brückenelektrolyt (16) liegt.

13. Referenzsystem mit Bezugselektrode für die Analysen-Meßtechnik, insbesondere zur Messung von (Wasserstoff)-Ionenkonzentrationen und -aktivitäten in einem Meßmedium (Meß- oder Prozeßlösung) in Verbindung mit einer potentiometrischen Meßelektrode (pH-Meßelektrode; pX-Elektrode) zur Erzeugung konstanter Bezugspotentiale in der Photometrie, Coulometrie u. dgl., mit einem ersten, mit dem Meßmedium über ein erstes Diaphragma in Verbindung stehenden Übergangselektrolyten (Brückenelektrolyt) und einem zweiten, mit dem ersten Elektrolyten über ein zweites Diaphragma in Verbindung stehenden inneren Elektrolyten, zur Durchführung des Verfahrens nach Anspruch 1-4, dadurch gekennzeichnet, daß eine zusätzliche Überwachungselektrode (pH-Elektrode; pX-Elektrode) zur Messung des pH-Werts (pX-Wert) des Brückenelektrolyts (16) vorgesehen ist, wobei das das Bezugspotential auch für die Überwachungsmessung liefernde Referenzsystem von einer Metall/Metallsalz-Ableitung (AgAgCl-Ableitung 33) gebildet ist, die in ein Gefäß (31) eintaucht, welches eine Flüssigkeit enthält, die mit dem Salz der Ableitung das Anion gemeinsam hat und mit Bezug auf dieses konzentrationsstabil ist (KCl-Lösung), derart, daß sich Niederohmigkeit in der Meß- und Überwachungsgrößenerfassung in diesem Teilsystembereich ergibt.

14. Referenzsystem nach Anspruch 13, dadurch gekennzeichnet, daß sämtliche Meß- und Überwachungssignalgrößen weiterverarbeitenden Systemen (Differenzverstärkern, mit hohen Eingangswiderständen) zugeführt sind.

Fig. 1

0156376

Fig. 2

Fig. 3